# NEW EUROPEAN PATENT SPECIFICATION

(11) **EP 2 028 361 B2**
(45) Date of publication and mention of the opposition decision: **13.04.2016**
(45) Mention of the grant of the patent: 26.12.2012
(21) Application number: 08014784.6
(22) Date of filing: 20.08.2008
(51) Int. Cl.: F16H 57/04, B01D 46/00

(54) **Air cleaner**
Luftreiniger
Épurateur d'air

(30) Priority: 20.08.2007 JP 2007214108
(43) Date of publication of application: 25.02.2009
(73) Proprietor: Yamaha Hatsudoki Kabushiki Kaisha, Iwata-shi, Shizuoka 438-8501 (JP)
(72) Inventor: Nobuhira, Takayuki, Iwata-shi Shizuoka-ken 438-8501 (JP)
(74) Representative: Grünecker Patent- und Rechtsanwälte PartG mbB

(56) References cited:
- EP-A1- 1 647 702
- EP-A2- 1 927 792
- WO-A1-02/101225
- DE-A1- 19 715 602
- DE-A1- 19 951 408
- DE-U1- 20 108 544
- JP-A- 7 125 669
- JP-A- 59 077 924
- US-A- 4 056 376
- US-A1- 2006 272 509
- US-A1- 2006 272 509
- US-A1- 2007 023 214

## Description

The present invention relates to a straddle-type vehicle with an air cleaner.

A straddle-type vehicle with an air cleaner can be taken from the prior art document US 2007/0023214 A1. In particular, said document teaches a filter disposed up-right with regard to the longitudinal direction of the vehicle and obliquely to an incoming direction of the outside airfrom the intake port and disposed perpendicular a flowing-out direction of the air from an exhaust port.

In an air cleaner with which a vehicle is provided, the inside of a box-shaped case is generally divided into an intake port side air chamber (hereinafter, a suction side air chamber) and an exhaust port side air chamber (hereinafter, a discharge side air chamber) by a filter as disclosed in Japanese Unexamined Patent Publication No. 07-125669.

However, in the conventional air cleaner, the smooth flow of air is easily hindered. That is, in the conventional air cleaner, the filter is generally disposed so as to face the passing direction of the air flowing into the suction side air chamber. Therefore, when the passing cross section area of the air cannot be extended in view of the layout of the vehicle, the filter area must be decreased, and the filter is clogged by using the filter for a short period.

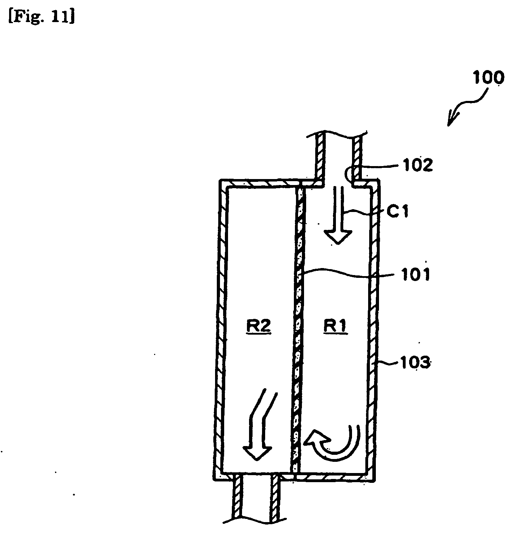

On the other hand, when a filter 101 is provided so as to extend along an inflow direction C1 of air inflowing from an intake port 102 as in an air cleaner 100 shown in Fig. 11, the filter area can be increased without extending the passing cross section area of the air, and the smooth flow of the air can be maintained over a long period of time.

However, since a wall 103 constituting an air chamber is provided in parallel with the filter 101 in the air cleaner 100 shown in Fig. 11, the flow of the air is disturbed in the back of a suction side air chamber R1, and the smooth flow of the air to a discharge side air chamber R2 from the suction side air chamber R1 may be hindered. The present invention has been made in view of the above problems.

It is an objective of the present invention to provide a straddle-type vehicle with an air cleaner capable of smoothly flowing air.

According to the present invention, said objective is solved by a straddle-type vehicle having the features of independent claim 1. Preferred embodiments are laid down in the dependent claims. Accordingly, it is provided an air cleaner comprising: a case with at least an intake port configured to lead outside air into a suction side airchamber of the case and at least an exhaust port configured to discharge air from a discharge side air chamber of the case; and a filter separating the suction side air chamber from the discharge side air chamber, wherein the filter is inclined with regard to at least one wall of the case.

Preferably, the exhaust port is provided on a side opposite to the intake port, and/or the filter is disposed so as to extend to a side of the exhaust port from a side of the intake port.

Further, preferably a wall part being one of the walls of the suction side air chamber and facing the filter is located such that a distance between the wall part and the filter is gradually decreased to the back of the suction side air chamber from the intake port, and/or a wall part being one of the walls of the discharge side air chamber and facing the filter is located such that a distance between the wall part and the filter is gradually increased to the exhaust port.

Still further, the filter is disposed obliquely to an incoming direction of the outside air from the intake port.

Yet further, the filter is disposed obliquely to a flowing-out direction of the air from the exhaust port.

Further, the case comprises a case body and a case cover mounted to said case body and, preferably, one of the intake port and the exhaust port is located in the case body and the other of said intake port and said exhaust port is located in the case cover.

Still further, preferably the filter is supported in the case by a frame member, said frame member being preferably supported by the case body and/or the case cover.

Yet further still, preferably at least one rib rises inside the case on the side of the filter and substantially extends in a direction crossing to an inflow direction of the airfrom the intake port, and/or a flowing-out direction of the air from the exhaust port.

Preferably, at least one inside wall of the case comprises a plurality of, preferably stepwise, level differences.

There is further disclosed a drive unit for a vehicle, said drive unit having a continuously variable transmission and an air cleaner according to one of the above embodiments, the exhaust port being located to discharge air towards the continuously variable transmission.

Preferably, the continuously variable transmission is stored in a transmission case, and the exhaust port is connected to said transmission case.

Preferably, an air intake passage is disposed so as to extend in substantially longitudinal direction of the vehicle, said air intake passage having the air cleaner set in an intermediate position in said longitudinal direction.

Further, the filter of the air cleaner extends in longitudinal direction of the vehicle.

In the following, the present invention is explained in greater detail by means of embodiments thereof in conjunction with the accompanying drawings, wherein:
- Fig. 1: is a side view of a motorcycle provided with an air cleaner according to an embodiment;
- Fig. 2: is a side view showing a vehicle body frame and an engine unit with which the motorcycle is provided;
- Fig. 3: is a plan view showing the vehicle body frame and the engine unit;
- Fig. 4: is a partial sectional view of the engine unit;
- Fig. 5: is a right side view of the air cleaner;
- Fig. 6: is a left side view of the air cleaner;
- Fig. 7: is a sectional view along the line VII-VII shown in Fig. 5;
- Fig. 8: is a perspective view of a case cover constituting the air cleaner;
- Fig. 9: is a perspective view of a case body constituting the air cleaner;
- Fig. 10: is a perspective view of the case body to which a frame member supporting a filter is mounted; and
- Fig. 11: is an example of an air cleaner eliminating the problems of a conventional air cleaner.

Amongothers, the following reference signs are used in the figures:v
1: motorcycle
3: front wheel
4: rear wheel
6: steering shaft
7: front fork
10: engine unit
13: crankshaft
14: cylinder block
15: piston
20: vehicle body frame
21: steering head
22: main frame
23: seat rail
24: stay
25: bracket
26: rear arm
30: continuously variable transmission
31: driving side pulley
32: driven side pulley
33: belt
34: driven shaft
35: clutch
36: intermediate shaft
37: output shaft
38: transmission case
39: supporting member
41: air intake pipe
42: throttle body
43: duct
45: air cleaner for engine
70: air intake passage
71: air intake duct
72: air cleaner
73: case body
73a: exhaust port
74: case cover
74a: intake port
75: filter
76: frame member
77: tip duct
78: air exhaust duct

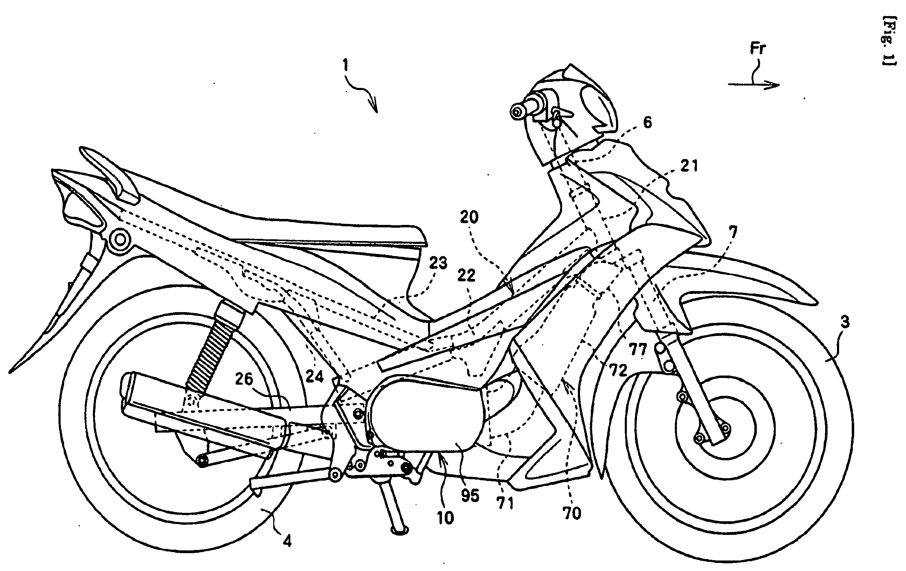

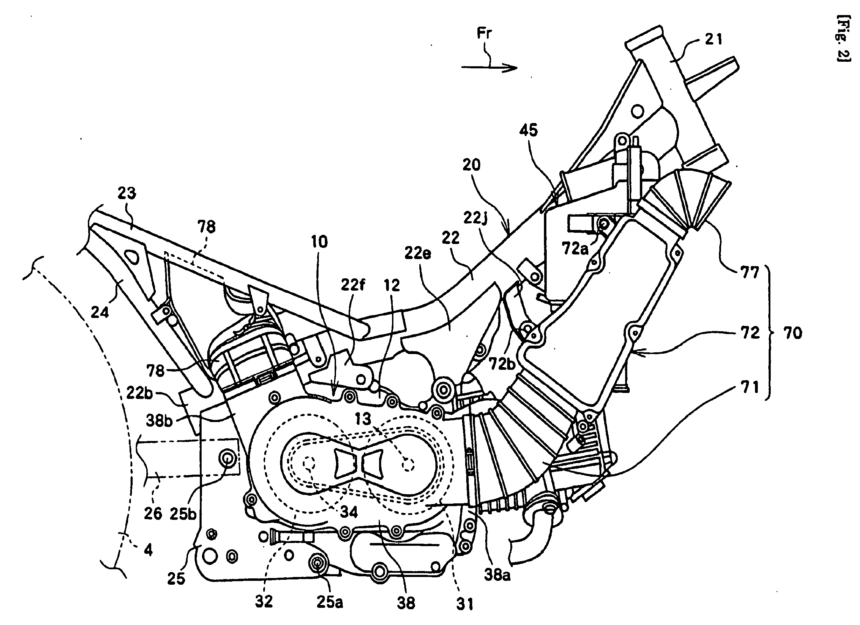

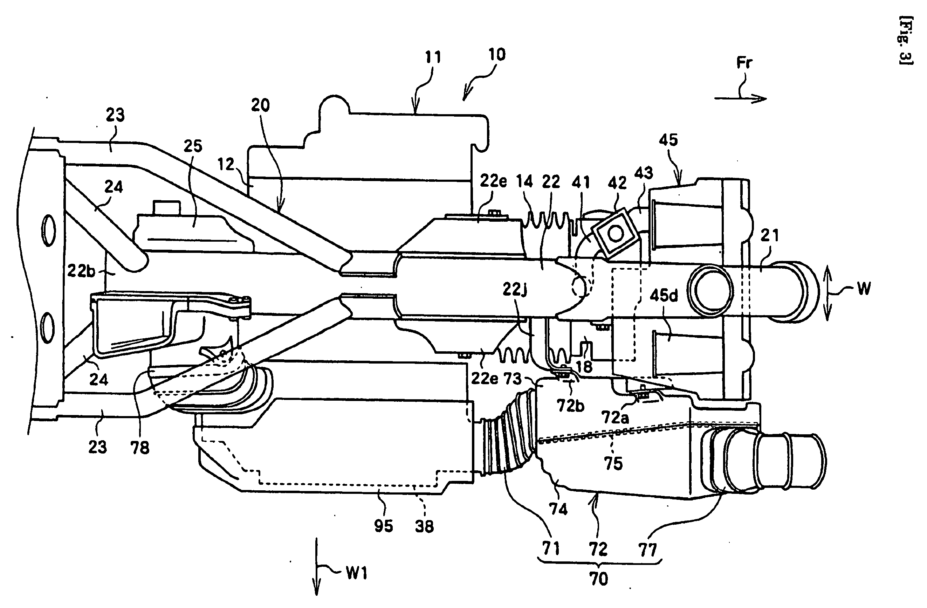

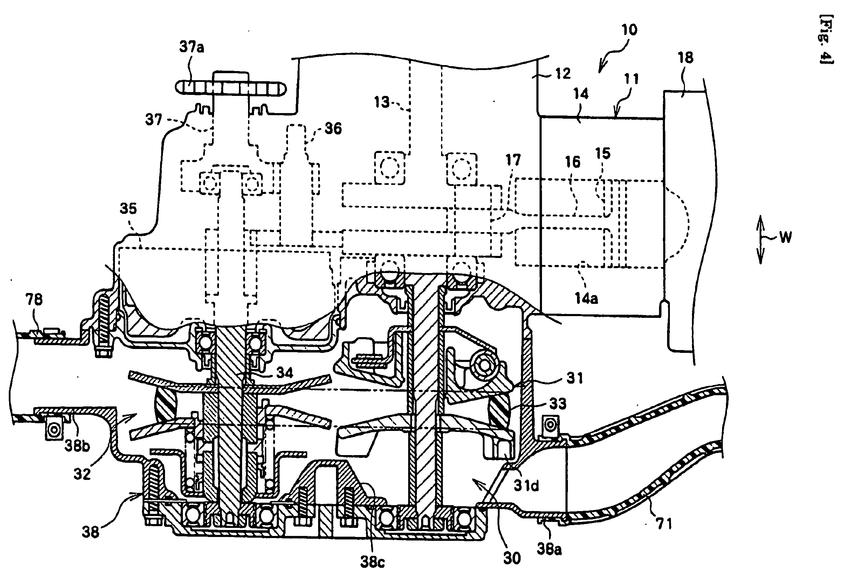

Hereinafter, one embodiment will be described with reference to the drawings. Fig. 1 is a side view of a motorcycle 1 provided with an air cleaner 72 which is an example of a vehicle, respectively a straddle-type vehicle. In general, a straddle-type vehicle has a body frame and a seat on which a rider can be seated straddling the bodyframe when being seated. Fig. 2 isa side view showing a vehicle body frame 20, an engine unit 10 and an air cleaner 72 with which the motorcycle 1 is provided. Fig. 3 is a plan view thereof. Fig. 4 is a partial sectional view of the engine unit 10. Herein, an air cleaner cleaning air sent into a transmission case 38 storing a continuously variable transmission 30 will be described as an example.

As shown in Figs. 2 and 3, the vehicle body frame 20 is provided with a steering head 21 and a main frame 22. The vehicle body frame 20 is provided with a pair of right and left seat rails 23 and 23, stays 24 and 24 and brackets 25 and 25.

The steering head 21, which is provided on the front end part of the vehicle body frame 20, rotatably supports a steering shaft 6 (see Fig. 1). As shown in Fig. 1, a front fork 7 supporting a front wheel 3 is connected to the lower end part of the steering shaft 6. As shown in Fig. 2, the main frame 22 has a front end part connected to the steering head 21. The main frame 22 extends in a downwardly slanting direction toward the rear part of a vehicle body (a direction opposite to a direction shown by Fr in Fig. 2) from the front end part of the main frame 22. The main frame 22 has a rear end part (lower end part) 22b located in front of a rear wheel 4. The seat rail 23 has a front end part connected to the intermediate position of the main frame 22 (see Fig. 3). The seat rail 23 extends in an upwardly slanting direction toward the rear part of the vehicle body from the front end part of the seat rail 23. As shown in Fig. 2, the stay 24 has a front end part connected to the rear end part 22b of the main frame 22. The stay 24 extends in an upwardly slanting direction from the front end part of the stay 24. The stay 24 has an upper end part connected to the seat rail 23.

The bracket 25, which has a plate shape, has an upper edge part bonded to the rear end part 22b of the main frame 22. The bracket 25 downwardly extends from the upper edge part. The bracket 25 has an upper part on which a support part 25b supporting a pivot shaft (not shown) is provided. A rear arm 26 has a front end part mounted to the pivot shaft. The rear arm 26, which extends backward, has a rear end part supporting the axle of the rear wheel 4. The rear arm 26 swings on the pivot shaft along with the rear wheel 4 and swings independently of the engine unit 10.

The engine unit 10, which is disposed in front of the rear wheel 4, is supported by the vehicle body frame 20. In the example described herein, a crank case 12 with which the engine unit 10 is provided has an upper wall mounted to brackets 22e and 22f provided on the main frame 22. The crank case 12 has a lower part mounted to a support part 25a provided on the lower part of the bracket 25.

As shown in Fig. 4, the engine unit 10 is provided with an engine 11 and the belt type continuously variable transmission 30. The engine 11 is provided with the crank case 12, a crankshaft 13, a cylinder block 14 and a piston 15. In the cylinder block 14, a cylinder 14a is formed. The combustion of air-fuel mixture of air and fuel sent into the cylinder 14a causes the reciprocating movement of a piston 15 in the cylinder 14a. The piston 15 is connected to the crankshaft 13, and the reciprocating movement of the piston 15 is converted into the rotational movement by the crankshaft 13. The crankshaft 13, which is disposed so as to extend in a vehicle width direction, is supported by the crank case 12 located in the back of the cylinder block 14. As shown in Figs. 2 and 3, an air cleaner45 cleaning air sent to the engine 11 (hereinafter, an air cleaner for an engine) is disposed above and obliquely with respect to the engine 11. The air sent from air cleaner 45 for the engine is sent into the cylinder 14a through a throttle body 42 and an air intake pipe 41.

As shown in Fig. 4, the continuously variable transmission 30 has a driving side pulley 31 and a driven side pulley 32. The driving side pulley 31, which is provided on the crankshaft 13, rotates along with the crankshaft 13. The driven side pulley 32, which is provided on a driven shaft 34 disposed in the back of the crankshaft 13, rotates along with the driven shaft 34. A belt 33 transmitting torque to the driven side pulley 32 from the driving side pulley 31 is wound around the driving side pulley 31 and the driven side pulley 32. The continuously variable transmission 30 slows down the rotation of the crankshaft 13, and transmits the rotation to the driven shaft 34.

The rotation of the driven shaft 34 is transmitted to an output shaft 37 disposed coaxially with the driven shaft 34 through an automatic clutch 35 provided on the driven shaft 34 and an intermediate shaft 36 disposed in the frontof the driven shaft 34. A sprocket 37a is mounted to the output shaft 37. The rotation of the sprocket 37a is transmitted to a sprocket (not shown) capable of rotating along with an axle 4a of the rear wheel 4 through a chain which is not shown.

As shown in Fig. 2, the engine unit 10 is provided with the transmission case 38 covering the continuously variable transmission 30 from the side. As shown in Fig. 3, the transmission case 38 is located on the outer side of the main frame 22 in the vehicle width direction (the direction shown by W1 in Fig. 3). As shown in Figs. 1 and 3, the transmission case 38 is covered with a cover 95 from the outer side in the vehicle width direction.

As shown in Fig. 2, an exhaust port 38b projected in an upwardly slanting direction is formed on the outer side of the main frame 22 in the vehicle width direction in the rear part of the transmission case 38. An air exhaust duct 78 discharging air in the transmission case 38 is connected to the exhaust port 38b. The air exhaust duct 78 extends in an upwardly slanting direction from the exhaust port 38b on the outer side of the main frame 22 in the vehicle width direction.

As shown in Fig. 2, an intake port 38a projected in the forward direction is formed in the front part of the transmission case 38. An air intake passage 70 sending outside air for cooling the belt 33 to the transmission case 38 is connected to the intake port 38a. The air intake passage 70 extends in an upwardly slanting direction toward the front part of the vehicle body from the intake port 38a on the outer side of the cylinder block 14 of the engine 11 and air cleaner 45 for the engine in the vehicle width direction.

As shown in Fig. 2, the motorcycle 1 is provided with an air intake duct 71 and a tip duct 77 as the air intake passage 70 for the transmission. Between the air intake duct 71 and the tip duct 77, the air cleaner 72 is disposed. The air intake duct 71 is connected to the intake port 38a. The air intake duct 71 extends in an upwardly slanting direction from the intake port 38a on the outer side of the cylinder block 14 in the vehicle width direction. The air cleaner 72 is mounted to the upper end of the air intake duct 71. The tip duct 77 taking in the outside air into the air cleaner 72 is mounted to the upper end part of the air cleaner 72.

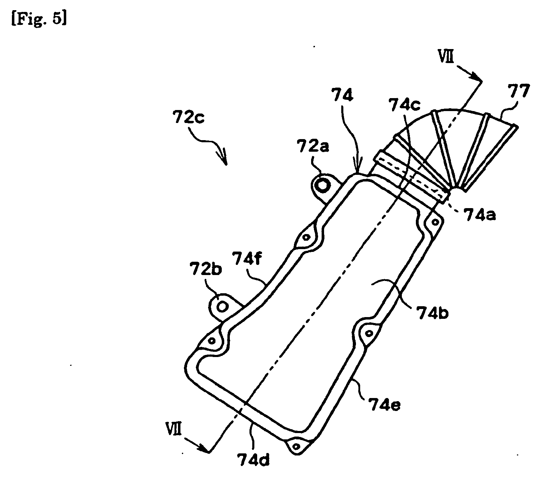

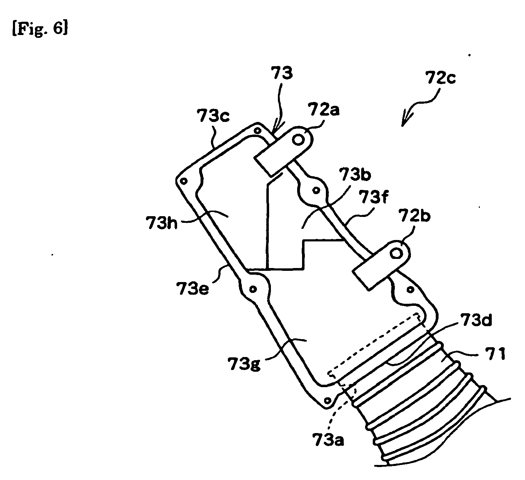

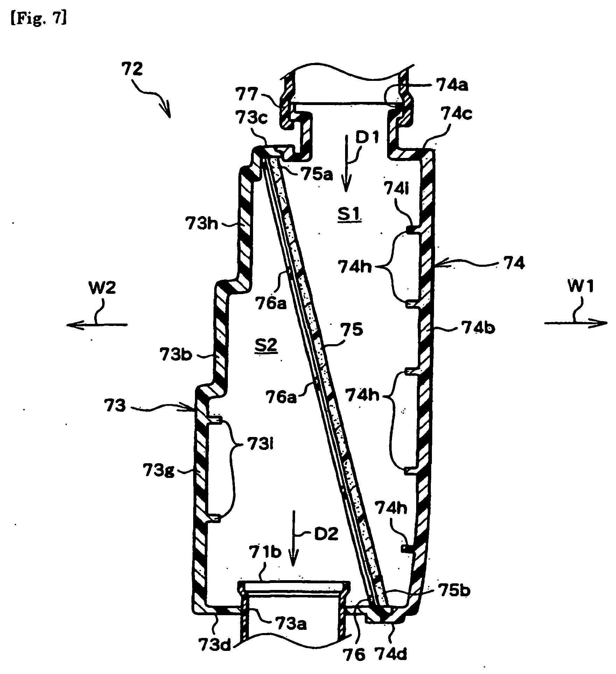

Herein, the air cleaner 72 will be described in detail. As shown in Fig. 2 or 3, the air cleaner 72, which extends in an upwardly slanting direction toward the front part of the vehicle body, has an almost rectangular parallelepiped shape, and is disposed on the outer side of the air cleaner 45 for the engine in the vehicle width direction. The air cleaner 72 is provided with a case 72c and a filter 75 disposed in the case 72c. The case 72c is supported by the air cleaner 45 for the engine and the vehicle body frame 22. In this example, as shown in Fig. 3, mounting parts 72a and 72b upwardly projected are formed on the case 72c. The mounting part 72a is mounted to the outer wall of the air cleaner 45 for the engine. The mounting part 72b is mounted to a bracket 22j extending from the main frame 22 in the vehicle width direction. Fig. 5 is a right side view of the air cleaner 72. Fig. 6 is a left side view of the air cleaner 72. Fig. 7 is a sectional view along the line VII-VII shown in Fig. 5.

The case 72c is formed so as to be separatable in the horizontal direction (the vehicle width direction). As shown in Figs. 5 to 7, the case 72c is provided with a case body 73 supported by the air cleaner 45 for the engine and the vehicle body frame 22, and a case cover 74 mounted to the case body 73. The air cleaner 72 has an intake port 74a connected to the tip duct 77. This intake port 74a leads the outside air into the case 72c.

The air cleaner 72 has an exhaust port 73a connected to the transmission case 38 through the air intake duct 71 on the side opposite to the intake port 74a. Air in the case 72c is discharged from the exhaust port 73a, and is then sent into the transmission case 38. In this example, the intake port 74a is formed in the case cover 74, and the exhaust port 73a is formed in the case body 73.

As shown in Fig. 7, a filter 75 is disposed so as to extend to the exhaust port 73a side from the intake port 74a side in the air cleaner 72. The filter 75 divides the inside of the air cleaner 72 into an air chamber S1 into which the outside air flows from the intake port 74a (hereinafter, a suction side air chamber) and an air chamber S2 discharging the air from the exhaust port 73a (hereinafter, a discharge side air chamber). The air cleaner 72, which extends in an upwardly slanting direction toward the front part of the vehicle body, has an almost rectangular parallelepiped shape. The filter 75 is disposed so as to extend in the longitudinal direction of the vehicle body in the case 72c of the air cleaner 72 (see Fig. 3). In the example described herein, the outer wall of the suction side air chamber S1 is constituted by the case cover 74, and the outer wall of the discharge side air chamber S2 is constituted by the case body 73. Accordingly, the filter 75 is inclined with regard to at least one wall of the case 72c.

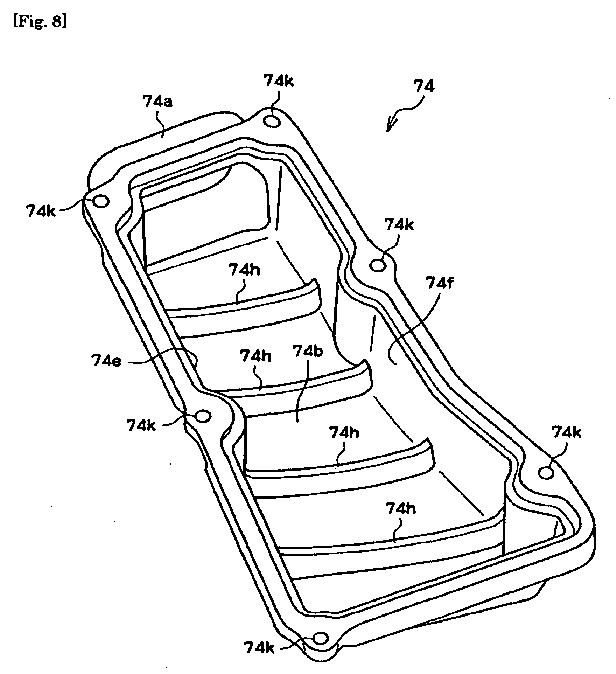

The case cover 74 will be described. Fig. 8 is a perspective view of the case cover 74 viewed from the inner side. As shown in Figs. 7 and 8, the case cover 74, which has an opened side surface, has an almost rectangular parallelepiped shape. The case cover 74 has a side wall part 74b having an almost rectangular shape, an upper wall part 74c rising from the periphery edge of the side wall part 74b, a lower wall part 74d facing the upper wall part 74c, a front wall part 74e extending in an upwardly slanting direction toward the edge of the upper wall part 74c from the edge of the lower wall part 74d, and a back wall part 74f facing the front wall part 74e and extending in an upwardly slanting direction toward the edge of the upper wall part 74c from the edge of the lower wall part 74d.

As shown in Fig. 7, the width (the length in the vehicle width direction) of the upper wall part 74c is larger than that of the lower wall part 74d. The intake port 74a upwardly projected is formed on this upper wall part 74c, and the end part of the tip duct 77 is mounted to the intake port 74a.

As shown in Fig. 7, the side wall part 74b, which is disposed so as to extend in an upwardly slanting direction toward the upper wall part 74c side from the lower wall part 74d side, faces the filter 75. The side wall part 74b is disposed so that a distance between the side wall part 74b and the filter 75 is gradually decreased to the back (the lower wall part 74d side) of the suction side air chamber S1 from the intake port 74a. In the example shown in Fig. 7, the side wall part 74b is disposed in substantially parallel with the inflow direction (the direction shown by D1 in Fig. 7) of the air inflowing from the intake port 74a. On the other hand, the filter 75 is disposed obliquely to the inflow direction of the air so that a lower end edge 75b of the filter 75 is located on the outer side (the direction shown by W1 in Fig. 7) relative to an upper end edge 75a in the vehicle width direction.

As shown in Figs. 7 or 8, a plurality (herein, five) of ribs 74h rising to the filter 75 side from the side wall part 74b are formed on inner side of the side wall part 74b. These ribs 74h extend in a direction crossing to the inflow direction (the direction shown by D1 in Fig. 7) of the air inflowing from the intake port 74a. Each of the ribs 74h has a periphery surface on which a plane 74i crossing the inflow direction is formed. In this example, the ribs 74h extend toward the front wall part 74e from the back wall part 74f, and the plane 74i of each the ribs 74h is orthogonal to the inflow direction of the air.

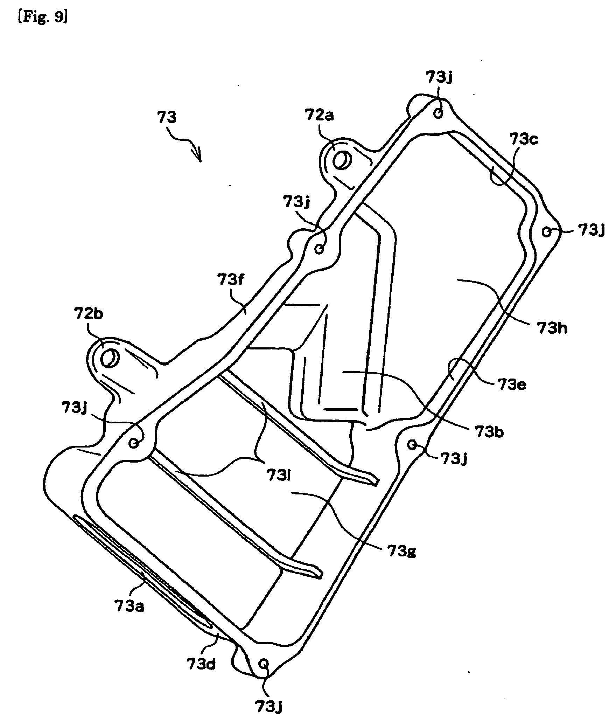

Next, the case body 73 will be described. Fig. 9 is a perspective view of the case body 73 viewed from the inner side thereof. As shown in Figs. 7 and 9, the case body 73, which has an opened side surface, has an almost rectangular parallelepiped shape as in the case cover 74. The case body 73 has a side wall part 73b having an almost rectangular shape, an upper wall part 73c rising from the periphery edge of the side wall part 73b, a lower wall part 73d facing the upper wall part 73c and rising from the periphery edge of the side wall part 73b, a front wall part 73e extending in an upwardly slanting direction toward the edge of the upper wall part 73c from the edge of the lower wall part 73d, and a back wall part 73f facing the front wall part 73e and extending in an upwardly slanting direction toward the edge of the upper wall part 73c from the edge of the lower wall part 73d.

As shown in Fig. 7, the width (the length in the vehicle width direction) of the lower wall part 73d is larger than thatof the upper wall part 73c. The exhaust port 73a is formed in this lower wall part 73d, and an intake port 71 b provided on the upper end of the air intake duct 71 is fitted into the exhaust port 73a.

As shown in Figs. 6 and 7, the side wall part 73b is disposed so as to extend in an upwardly slanting direction toward the upper wall part 73c side (the intake port 74a side) from the lower wall part 73d side (the exhaust port 73a side) at the opposite side position of the case cover 74 of the side wall part 74b across the filter 75. The side wall part 73b faces the filter 75. The side wall part 73b is disposed so that a distance between the side wall part 73b and the filter 75 is gradually increased to the exhaust port 73a side from the intake port 74a side. In this example, as described above, the filter 75 is disposed obliquely to the outflow direction (the direction shown by D2 in Fig. 7) of the air flowing out from the exhaust port 73a so that the lower end edge 75b of the filter 75 is located on the outer side (the direction shown by W1 in Fig. 7) relative to the upper edge 75a of the filter 75 in the vehicle width direction.

As shown in Figs. 7 and 9, a plurality of level differences (herein, two) are formed in the side wall part 73b. Said level differences are preferably stepwise. A wall part 73g located on the rear side of the side wall part 73b is located on the center side (the direction shown by W2 in Fig. 7) relative to a wall part 73h located on the front side in the vehicle width direction.

As shown in Figs. 7 and 9, a plurality (herein, two) of ribs 73i rising to the filter 75 side from the side wall part 73b are formed on the inner side of the side wall part 73b. As shown in Fig. 9, the ribs 73i are formed so as to extend to the front wall part 73e from the back wall part 73f.

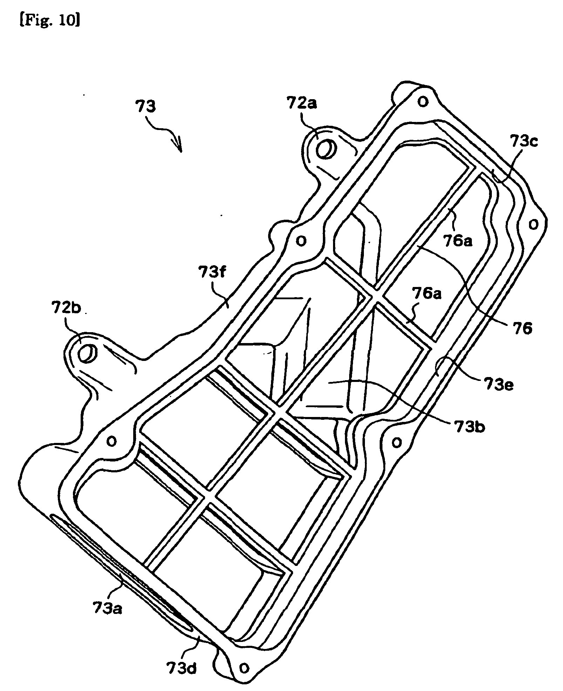

As shown in Fig. 7, the filter 75 is supported in the case body 73 by a frame member 76 disposed in the case body 73. Fig. 10 is a perspective view of the case body 73 to which the frame member 76 is mounted. As shown in Fig. 10, the frame member 76 is fitted into a region formed by the wall parts (in this example, the upper wall part 73c, the lower wall part 73d, the front wall part 73e and the backwall part 73f) erected from the periphery of the side wall part 73b of the case body 73. Thus, said frame member 76 is supported by the case body and/or can be also supported by the case cover (74). The frame member 76 has a supporting part 76a extending toward the lower wall part 73d from the upper wall part 73c and/or toward the back wall part 73f from the front wall part 73e. The filter 75, which is disposed so as to block the opened side surface (the surface to which the case cover 74 is mounted) of the case body 73, is supported by the supporting part 76a of frame member 76.

As shown in Figs. 8 and 9, a plurality (herein, six) of mounting parts 73j are formed on the periphery of the case body 73. In the case cover 74, mounting parts 74k is also respectively provided at positions corresponding to the mounting parts 73j. The case cover 74 is mounted to the case body 73, for example, by bolting the mounting part 73j to the mounting part 74k located at the corresponding position.

In the air cleaner 72 described above, the side wall part 74b of the case cover 74 facing the filter 75 is provided so that the distance between the side wall part 74b and the filter 75 is gradually decreased to the back of the suction side air chamber S1 from the intake port 74a. The side wall part 73b of the case body 73 facing the filter 75 is provided so that the distance between the side wall part 73b and the filter 75 is gradually increased to the exhaust port 73a. This can secure the large area of the filter 75, and smoothly flow the air to the discharge side air chamber S2 from the suction side air chamber S 1.

In the air cleaner 72, the filter 75 is disposed obliquely to the incoming direction D1 of the outside air from the intake port 74a. This can simplify the shape of the case cover 74 and decrease the distance between the filter 75 and the side wall part 74b of the case cover 74 to the back of the suction side air chamber S1.

In the air cleaner 72, the filter 75 is disposed obliquely to the direction D2 of the air flowing out from the exhaust port 73a. This can simplify the shape of the case body 73, and increase the distance between the filter 75 and the side wall part 73b of the case body 73 to the exhaust port 73a.

In the air cleaner 72, the ribs 74h rising to the filter 75 side and extending in the direction crossing to the inflow direction D1 of the air from the intake port 74a are formed on the inner wall of the case 72c. This can further smoothly flow the air to the discharge side air chamber S2 from the suction side air chamber S1.

In the motorcycle 1, the air intake passage 70 is disposed so as to extend in the longitudinal direction of the vehicle, and the air cleaner 72 is set in the intermediate position of the air intake passage 70. The filter 75 of the air cleaner 72 is disposed so as to extend in the longitudinal direction of the vehicle body. This can realize the vehicle body suppressing the increase in the vehicle width.

The present teaching is not limited to the air cleaner 72 described above, and various modifications can be carried out. For example, in the air cleaner 72, the distance between the side wall part 74b of the case cover 74 and the filter 75 is gradually decreased to the back of the suction side air chamber S1 by inclining the filter 75 to the inflow direction of the air. However, for example, the filter 75 may be disposed in parallel to the inflow direction D1 of the air and the wall part of the case cover may be inclined to the inflow direction D1 of the air to gradually decrease the distance between the wall part of the case cover and the filter 75 to the back of the suction side air chamber S1.

In the air cleaner 72, the filter 75 is inclined to the inflow direction of the air to gradually increase the distance between the side wall part 73b of the case body 73 and the filter 75 to the exhaust port 73a. However, for example, the filter 75 may be disposed in parallel to the outflow direction D2 of the air and the wall part of the case body may be inclined to the outflow direction D2 of the air to gradually increase the distance between the wall part of the case body and the filter to the exhaust port.

According to the present teaching, air can be smoothly flowed to the discharge side air chamber from the suction side air chamber. Herein, the straddle-type vehicle includes a motorcycle (including a motor scooter), a four-flower buggy and a snowmobile.

The description above discloses (among others) an embodiment of an air cleaner comprising: an intake port leading outside air into a case; an exhaust port provided on the side opposite to the intake port in the case; and a filter dividing the inside of the case into a suction side air chamber into which the outside air flows from the intake port and an exhaust side air chamber discharging air from the exhaust port, wherein the filter is disposed so as to extend to the exhaust port side from the intake port side; a wall part being one of walls of the suction side air chamber and facing the filter is provided so that a distance between the wall part and the filter is gradually decreased to the back of the suction side air chamber from the intake port; and a wall part being one of walls of the exhaust side air chamber and facing the filter is provided so that a distance between the wall part and the filter is gradually increased to the exhaust port.

Preferably, the filter is disposed obliquely to an incoming direction of the outside air from the intake port.

Further, preferably the filter is disposed obliquely to a flowing-out direction of the air from the exhaust port.

Further, preferably a rib rising on the filter side and extending in a direction crossing to an inflow direction of the air from the intake port is formed on an inner wall of the case.

Further, preferably the exhaust port is connected to a case storing a continuously variable transmission.

Preferably, an engine unit comprises the air cleaner according to one of the preceding embodiments, a case leading outside air from the air cleaner, and a continuously variable transmission stored in the case.

Preferably a straddle-type vehicle comprises the air cleaner according to one of the preceding embodiments.

Further, preferably the straddle-type vehiclefurther comprises an air intake passage disposed so as to extend in a longitudinal direction of the vehicle, the air intake passage having the air cleaner set in an intermediate position of the longitudinal direction, wherein the filter of the air cleaner is disposed so as to extend in a longitudinal direction of a vehicle.

In order to provide an air cleaner capable of smoothly flowing air, the following preferred embodiment is suggested:

An air cleaner 72 is provided with an intake port 74a leading outside air, an exhaust port 73a provided on the side opposite to the intake port 74a, and a filter 75. The filter 75 is disposed so as to extend to the exhaust port 73a side from the intake port 74a side. A side wall part 74b of a case cover 74 constituting a suction side air chamber S1 is provided so that a distance between the side wall part 74b and the filter 75 is gradually decreased to the back of the suction side air chamber S1 from the intake port 74a. A side wall part 73b of the case body 73 constituting an exhaust side air chamber S2 is provided so that a distance between the side wall part 73b and the filter 75 is gradually increased to the exhaust port 73a.

## Claims

1. Straddle-type vehicle, with a drive unit and an air cleaner (72) comprising:
a case (72c) with at least an intake port (74a) configured to lead outside air into a suction side air chamber (S1) of the case (72c) and at least an exhaust port (73a) configured to discharge air from a discharge side air chamber (S2) of the case (72c); and
a filter (75) separating the suction side air chamber (S1) from the discharge side air chamber (S2), wherein the filter (75) is inclined with regard to at least one wall of the case (72c), and said filter (75) is disposed obliquely to an incoming direction of the outside air from the intake port (74a), **characterized in that** the filter (75) is disposed obliquely to a flowing-out direction of the air from the exhaust port (73a), wherein the filter (75) of the air cleaner (72) extends in longitudinal direction of the vehicle, wherein the case (72c) comprises a case body (73) and a case cover (74) mounted to said case body (73) and,g preferably, one of the intake port (74a) and the exhaust port (73a) is located in the case body (73) and the other of said intake port (74a) and said exhaust port (73a) is located in the case cover (74), said drive unit having a continuously variable transmission, the exhaust port (73a) being located to discharge air towards the continuously variable transmission.

2. Straddle-type vehicle according to claim 1, **characterized in that** the exhaust port (73a) is provided on a side opposite to the intake port (74a), and/or the filter (75) is disposed so as to extend to a side of the exhaust port (73a) from a side of the intake port (74a).

3. Straddle-type vehicle according to claim 1 or 2, **characterized in that** a wall part being one of the walls of the suction side air chamber (S1) and facing the filter (75) is located such that a distance between the wall part and the filter (75) is gradually decreased to the back of the suction side air chamber (S1) from the intake port (74a), and/or a wall part being one of the walls of the discharge side air chamber (S2) and facing the filter (75) is located such that a distance between the wall part and the filter (75) is gradually increased to the exhaust port (73a).

4. Straddle-type vehicle according to one of claims 1 to 3, **characterized in that** the filter (75) is supported in the case (72c) by a frame member (76), said frame member (76) being preferably supported by the case body (73) and/or the case cover (74).

5. Straddle-type vehicle according to one of claims 1 to 4, **characterized in that** at least one rib (73i,74h) rises inside the case (72c) on the side of the filter (75) and substantially extends in a direction crossing to an inflow direction of the air from the intake port (74a), and/or a flowing-out direction of the air from the exhaust port (73a).

6. Straddle-type vehicle according to one of claims 1 to 5, **characterized in that** at least one inside wall of the case (72c) comprises a plurality of, preferably stepwise, level differences.

7. Straddle-type vehicle according to one of claims 1 to 6, **characterized in that** the continuously variable transmission is stored in a transmission case (38), and the exhaust port (73a) is connected to said transmission case (38).

8. Straddle-type vehicle according to one of claims 1 to 7, **characterized in that** an air intake passage is disposed so as to extend in substantially longitudinal direction of the vehicle, said air intake passage having the air cleaner (72) set in an intermediate position in said longitudinal direction.

## Patentansprüche

1. Fahrzeug vom Spreizsitz-Typ, mit einer Antriebseinheit und einem Luftfilter (72), aufweisend:
ein Gehäuse (72c) mit zumindest einer Einlassöffnung (74a), konfiguriert, Außenluft in eine Ansaugseiten-Luftkammer (S1) des Gehäuses (72c) zu führen und zumindest einer Auslassöffnung (73a), konfiguriert, Luft von einer Auslassseiten-Luftkammer (S2) des Gehäuses (72c) abzugeben; und
einen Filter (75), der eine Ansaugseiten-Luftkammer (S1) von der Auslassseiten-Luftkammer (S2) trennt, wobei der Filter (75) in Bezug auf zumindest eine Wand des Gehäuses (72c) geneigt ist, und der Filter (75) schräg zu einer Ankuftsrichtung der Außenluft von der Einlassöffnung (74a) angeordnet ist, **dadurch gekennzeichnet, dass** der Filter (75) schräg zu einer Ausströmrichtung der Luft aus der Auslassöffnung (73a) angeordnet ist, wobei sich der Filter (75) des Luftfilters (72) in Längsrichtung des Fahrzeuges erstreckt, wobei das Gehäuse (72c) einen Gehäusekörper (73) und eine Gehäuseabdeckung (74) umfasst, die an dem Gehäusekörper (73) montiert ist, und vorzugsweise eine von der Einlassöffnung (74a) und der Auslassöffnung (73a) in dem Gehäusekörper (73) angeordnet ist und die andere von der Einlassöffnung (74a) und der Auslassöffnung (73a) in der Gehäuseabdeckung (74) angeordnet ist, wobei die Antriebseinheit ein stufenlos veränderbares Getriebe aufweist, wobei die Auslassöffnung (73a) angeordnet ist, Luft in Richtung zu dem stufenlos veränderbaren Getriebe abzugeben.

2. Fahrzeug vom Spreizsitz-Typ nach Anspruch 1, **dadurch gekennzeichnet, dass** die Auslassöffnung (73a) auf einer Seite gegenüberliegend zu der Einlassöffnung (74a) vorgesehen ist und/oder der Filter (75) so angeordnet ist, dass er sich zu einer Seite der Auslassöffnung (73a) von einer Seite der Einlassöffnung (74a) erstreckt.

3. Fahrzeug vom Spreizsitz-Typ nach Anspruch 1 oder 2, **dadurch gekennzeichnet, dass** ein Wandteil einer der Wände der Ansaugseiten-Luftkammer (S1) und dem Filter (75) zugewandt, derart angeordnet ist, dass ein Abstand zwischen dem Wandteil und dem Filter (75) zu der Rückseite der Ansaugseiten-Luftkammer (S1) von der Einlassöffnung (74a) allmählich vermindert ist und/oder ein Wandteil, der eines der Wände der Auslassseiten-Luftkammer (S2) ist und dem Filter (75) zugewandt, derart angeordnet ist, dass ein Abstand zwischen dem Wandteil und dem Filter (75) allmählich zu der Auslassöffnung (73a) hin, sich vergrößert.

4. Fahrzeug vom Spreizsitz-Typ nach einem der Ansprüche 1 bis 3, **dadurch gekennzeichnet, dass** der Filter (75) in dem Gehäuse (72c) durch einen Rahmenteil (76) gelagert ist, wobei der Rahmenteil (76) vorzugsweise durch den Gehäusekörper (73) und/oder die Gehäuseabdeckung (74) gelagert ist.

5. Fahrzeug vom Spreizsitz-Typ nach einem der Ansprüche 1 bis 5, **dadurch gekennzeichnet, dass** zumindest eine Rippe (73i, 74h) innerhalb des Gehäuses (72c) auf der Seite des Filters (75) aufsteigt und sich im Wesentlichen in eine Richtung erstreckt, die eine Strömungsrichtung der Luft von der Einlassöffnung (74a) und/oder eine Strömungsrichtung der Luft von der Auslassöffnung (73a) kreuzt.

6. Fahrzeug vom Spreizsitz-Typ nach einem der Ansprüche 1 bis 6, **dadurch gekennzeichnet, dass** zumindest eine innere Wand des Gehäuses (72c) eine Mehrzahl von vorzugsweise stufenweise Niveauunterschieden aufweist.

7. Fahrzeug vom Spreizsitz-Typ nach Anspruch 8, **dadurch gekennzeichnet, dass** das stufenlos veränderbare Getriebe in einem Getriebegehäuse (38) untergebracht ist und die Auslassöffnung (73a) mit dem Getriebegehäuse (38) verbunden ist.

8. Fahrzeug vom Spreizsitz-Typ nach einem der Ansprüche 1 bis 9, **dadurch gekennzeichnet, dass** ein Lufteinlasskanal so angeordnet ist, um sich im Wesentlichen in Längsrichtung des Fahrzeuges zu erstrecken, wobei der Einlasskanal den Luftfilter (72) hat, eingebracht in eine Zwischenposition in der Längsrichtung.

## Revendications

1. Véhicule du type à enfourcher, avec une unité d'entraînement et un épurateur d'air (72) comprenant :
un boîtier (72c) avec au moins un orifice d'admission (74a) conçu pour amener l'air extérieur dans une chambre à air côté aspiration (S1) du boîtier (72c), et au moins un orifice de sortie (73a) conçu pour évacuer l'air d'une chambre à air côté évacuation (S2) du boîtier (72c) ; et
un filtre (75) qui sépare la chambre à air côté aspiration (S1) de la chambre à air côté évacuation (S2), étant précisé que le filtre (75) est incliné par rapport à au moins une paroi du boîtier (72c), et que le filtre (75) est disposé en biais par rapport à une direction d'arrivée de l'air extérieur à partir de l'orifice d'admission (74a), **caractérisé en ce que** le filtre (75) est disposé en biais par rapport à une direction de sortie de l'air à partir de l'orifice de sortie (73a), étant précisé que le filtre (75) de l'épurateur d'air (72) s'étend dans le sens longitudinal du véhicule, étant précisé que le boîtier (72c) comprend un corps de boîtier (73) et un couvercle de boîtier (74) monté sur le corps de boîtier (73), et, de préférence, parmi l'orifice d'admission (74a) et l'orifice de sortie (73a) l'un est situé dans le corps de boîtier (73) tandis que l'autre est situé dans le couvercle de boîtier (74), ladite unité d'entraînement ayant une transmission variable en continu, l'orifice de sortie (73a) étant situé de manière à évacuer l'air vers la transmission variable en continu.

2. Véhicule du type à enfourcher selon la revendication 1, **caractérisé en ce que** l'orifice de sortie (73a) est prévu sur un côté opposé à l'orifice d'admission (74a), et/ou le filtre (75) est disposé de manière à s'étendre vers un côté de l'orifice de sortie (73a) à partir de l'orifice d'admission (74a).

3. Véhicule du type à enfourcher selon la revendication 1 ou 2, **caractérisé en ce qu'**une partie de paroi qui est constituée par l'une des parois de la chambre à air côté aspiration (S1) et qui fait face au filtre (75) est située de telle sorte qu'une distance entre la partie de paroi et le filtre (75) diminue progressivement vers l'arrière de la chambre à air côté aspiration (S1), à partir de l'orifice d'admission (74a), et/ou une partie de paroi qui est constituée par l'une des parois de la chambre à air côté évacuation (S2) et qui fait face au filtre (75) est située de telle sorte qu'une distance entre la partie de paroi et le filtre (75) augmente progressivement vers l'orifice de sortie (73a).

4. Véhicule du type à enfourcher selon l'une des revendications 1 à 3, **caractérisé en ce que** le filtre (75) est supporté dans le boîtier (72c) par un élément formant châssis (76), ledit élément formant châssis (76) étant de préférence supporté par le corps de boîtier (73) et/ou le couvercle de boîtier (74).

5. Véhicule du type à enfourcher selon l'une des revendications 1 à 4, **caractérisé en ce qu'**au moins une nervure (73i, 74h) fait saillie à l'intérieur du boîtier (72c), sur le côté du filtre (75), et s'étend globalement dans une direction qui croise une direction d'entrée de l'air à partir de l'orifice d'admission (74a), et/ou une direction de sortie de l'air à partir de l'orifice de sortie (73a).

6. Véhicule du type à enfourcher selon l'une des revendications 1 à 5, **caractérisé en ce qu'**au moins une paroi intérieure du boîtier (72c) comprend plusieurs différences de niveau, de préférence étagées.

7. Véhicule du type à enfourcher selon l'une des revendications 1 à 6, **caractérisé en ce que** la transmission variable en continu est logée dans un carter de transmission (38), et l'orifice de sortie (73a) est relié au carter de transmission (38).

8. Véhicule du type à enfourcher selon l'une des revendications 1 à 7, **caractérisé en ce qu'**un passage d'admission d'air est disposé de manière à s'étendre dans une direction globalement longitudinale du véhicule, ledit passage d'admission d'air contenant l'épurateur d'air (72) placé dans une position intermédiaire, dans ladite direction longitudinale.
